# EUROPEAN PATENT APPLICATION

(11) **EP 4 480 307 A1**
(43) Date of publication of application: **25.12.2024**
(21) Application number: 23208947.4
(22) Date of filing: 10.11.2023
(51) Int. Cl.: A01M 1/20, A01M 29/12

(54) **PORTABLE ELECTRIC HEATING MOSQUITO REPELLING APPARATUS**

(30) Priority: 20.06.2023 CN 202310740737
(71) Applicant: Li, Wenjie, Guangzhou Guangdong (CN)
(72) Inventor: LI, Wenjie, Guangzhou (CN)
(74) Representative: Zaboliene, Reda

(57) **Abstract**

The present application relates to a portable electric heating mosquito repelling apparatus, including an apparatus housing, a repellent drug, and a power supply element. The apparatus housing is provided with a heating unit, the repellent drug is detachably arranged on the heating unit, the heating unit is used to heat the repellent drug, the working temperature of the heating unit is greater than 40°C and less than 120°C, the power supply element is detachably arranged on the apparatus housing, and the power supply element is used to provide electric energy to the heating unit. The repellent drug used in the present application requires a relatively low working temperature, so the portable electric heating mosquito repelling apparatus of the present application has the relatively low working temperature, the apparatus itself has the smaller energy consumption, the endurance performance is better, the apparatus may be matched with the smaller power supply element.

## Description

### CROSS-REFERENCE TO RELATED APPLICATIONS

This application claims priority to Chinese Patent Application No. 202310740737.6, filed on June 20th, 2023, which are incorporated herein by reference in their entirety.

### TECHNICAL FIELD

The present application relates to the technical field of mosquito prevention and control, in particular to a portable electric heating mosquito repelling apparatus.

### BACKGROUND

A mosquito repelling problem is one of the problems that may not be ignored in people's daily life. In outdoor conditions, burning-type ordinary mosquito killers, mosquito repellent sprayers, daubing-type drugs and portable electric mosquito killers are more common ways to deal with mosquitoes. The burning-type ordinary mosquito killer is likely to cause safety problems, the mosquito repellent sprayer and the daubing-type drug usually need to add alcohol, glycerin and other substances as volatilizers in order to diffuse effective ingredients better, as to promote the prevention and control effect, but at the same time, it may cause sticky discomfort on skins, and may also pose safety hazards to people with sensitive skins and incomplete epidermal barrier functions. In conclusion, the portable electric mosquito killer is a highly feasible and widely recognized mosquito repellent mode.

The portable electric mosquito killer in existing technologies mainly diffuses pyrethroid solid drugs into the air environment by heating, and the melting point of the pyrethroid drugs is relatively high. Usually the working temperature and deviation of the electric heater are (165±8)°C, and it is indicated that its corresponding working temperature is also relatively high, so that heating and volatilizing it requires the electric mosquito killer to have the relatively high working temperature, the electric mosquito killer is relatively high in energy consumption and relatively low in endurance performance, and it is not beneficial to the lightweight of the electric mosquito killer.

### SUMMARY

A technical problem to be solved by the present application is to provide a portable electric heating mosquito repelling apparatus in response to the above deficiencies. A heating unit of the present application has a relatively low working temperature, so that the energy consumption is reduced, the endurance time may be greatly improved, and it is beneficial to the lightweight of the electric mosquito killer.

In order to solve the above technical problem, the present application adopts the following technical schemes.

A portable electric heating mosquito repelling apparatus, including an apparatus housing, a repellent drug, and a power supply element, the apparatus housing is provided with a heating unit, the repellent drug is detachably arranged on the heating unit, the heating unit is used to heat the repellent drug, the working temperature of the heating unit is greater than 40°C and less than 120°C, the power supply element is detachably arranged on the apparatus housing, and the power supply element is used to provide electric energy to the heating unit.

Further, the apparatus housing is provided with an information display unit, and the information display unit is used to display one or more of electric quantity of the power supply element, remaining usage time, and the working temperature of the heating unit.

Further, the apparatus housing is provided with a human-machine interaction unit, and the human-machine interaction unit is used to control on-off of the power supply element and is also used to adjust the working temperature of the heating unit.

Further, the repellent drug includes one or more of picaridin, dimethyl phthalate, diethylmethylbenzamide, and methyl nonyl ketone.

Further, the repellent drug is gel-like.

Further, the repellent drug is a paste-like substance.

Further, the repellent drug is attached to a porous unit, and the porous unit is detachably arranged on the heating unit.

Further, the repellent drug is tablet-like, and the heating unit is provided with an assembly structure matched with the repellent drug.

Further, the repellent drug is liquid.

After the above technical schemes are adopted, the present application has the following advantages compared to existing technologies:

The repellent drug used in the present application requires a relatively low working temperature, so the portable electric heating mosquito repelling apparatus of the present application has the relatively low working temperature, the apparatus itself has the smaller energy consumption, the endurance performance is better, the apparatus may be matched with the smaller power supply element, and the apparatus itself may be more lightweight.

The present application is described in detail below in combination with drawings and embodiments.

### BRIEF DESCRIPTION OF THE DRAWINGS

Fig. 1 is a front-view diagram of a portable electric heating mosquito repelling apparatus of the present application;
Fig. 2 is a rear-view diagram of the portable electric heating mosquito repelling apparatus of the present application; and
Fig. 3 is a schematic diagram of a local structure at a heating unit of the present application.

### DETAILED DESCRIPTION OF THE EMBODIMENTS

In order to make purposes, technical schemes, and advantages of the present application clearer, the technical schemes of the present application are further clearly and completely described below in combination with embodiments of the present application. It should be noted that the embodiments described are only a part of the embodiments of the present application, not all of the embodiments. Based on the embodiments in the present application, all other embodiments obtained by those of ordinary skill in the art without creative labor shall fall within the scope of protection of the present application.

It should be noted that if a directional indication (such as up, down, left, right, front, back, top, bottom, inside, outside, vertical, horizontal, longitudinal, counterclockwise, clockwise, circumferential, radial, and axial) is involved in the embodiments of the present application, the directional indication is only used to explain a relative position relationship, a motion situation and the like between various components in a specific posture (as shown in the drawings). If the specific posture is changed, the directional indication is also changed accordingly with it.

The term "and/or" in the embodiments of the present application is only a description of an association relationship of associated objects, it is indicated that there may be three types of relationships, for example, A and/or B, it may indicate: the existence of A alone, the existence of A and B simultaneously, and the existence of B alone.

The terms "first" and "second" in the embodiments of the present application are only used for descriptive purposes and may not be understood as indicating or implying the relative importance or implying the quantity of technical features indicated. Therefore, features limited to "first" and "second" may explicitly or implicitly include at least one of these features. In the description of the present application, the terms "including" and "having" and any variations thereof are intended to cover non-exclusive inclusion. For example, a system, a product, or a device that contains a series of components or units is not limited to the listed components or units, but optionally includes unlisted components or units, or optionally includes other components or units inherent to these products or devices. In the description of the present application, "plurality" means at least two, for example two and three, unless otherwise specified.

The reference to "embodiments" in this article means that specific features, structures, or characteristics described in combination with the embodiments may be contained in at least one embodiment of the present application. The phrase appearing in various positions in the description does not necessarily refer to the same embodiment, nor is it an independent or alternative embodiment that is mutually exclusive with other embodiments. Those skilled in the art explicitly and implicitly understand that the embodiments described in this article may be combined with other embodiments.

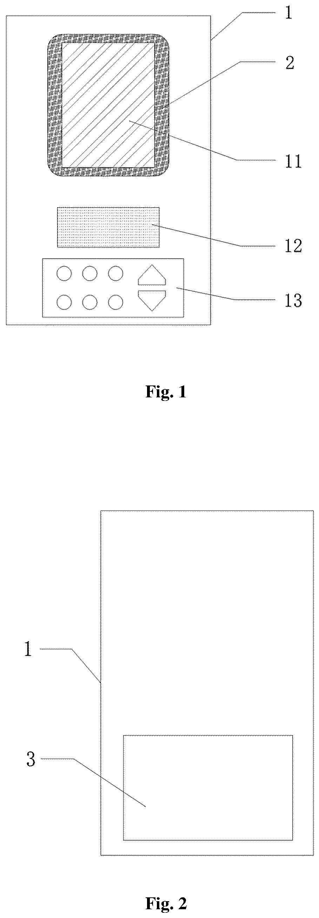

As shown in Figs. 1 and 2, a portable electric heating mosquito repelling apparatus includes an apparatus housing 1, a repellent drug 2, and a power supply element 3, the apparatus housing 1 is provided with a heating unit 11, the repellent drug 2 is detachably arranged on the heating unit 11, the heating unit 11 is used to heat the repellent drug 2, the working temperature of the heating unit 11 is greater than 40°C and less than 120°C, the power supply element 3 is detachably arranged on the apparatus housing 1, and the power supply element 3 is used to provide electric energy to the heating unit 11.

Preferably, the apparatus housing 1 is provided with an information display unit 12, the information display unit 12 is used to display one or more of electric quantity of the power supply element 3, remaining usage time, and the working temperature of the heating unit 11, and the information display unit 12 includes one or more of a display screen and an indicator light.

Preferably, apparatus housing 1 is provided with a human-machine interaction unit 13, the human-machine interaction unit 13 is used to control on-off of the power supply element 3 and adjust the working temperature of the heating unit 11, and the human-machine interaction unit 13 includes one or more of an adjustment button, a rotary knob, or a touch screen, as to achieve the on-off of the apparatus and the temperature adjustment of the heating unit 11.

In this embodiment, the power supply element 3 adopts one or more of a dry battery, a rechargeable battery, or a solar panel, the power supply element 3 is electrically connected with the heating unit 11, the information display unit 12, and the human-machine interaction unit 13, and used to provide electric energy to the heating unit 11 and the information display unit 12.

Preferably, the repellent drug 2 includes one or more of picaridin, dimethyl phthalate, diethylmethylbenzamide, and methyl nonyl ketone.

The repellent drug 2 used in the present application may gradually accelerate its volatilization rate under a heating condition, but while the heating temperature exceeds 120°C, the volatilization rate may be rapidly increased, so that the drug is consumed prematurely. In the present application, the working temperature of the heating unit 11 is set to be greater than 40°C and less than 120°C, and a plurality of temperature ranges is set in this interval. The temperature ranges are adjusted by operating in the human-machine interaction unit 13, herein the minimum value of 40°C in the interval is a diffusion temperature higher than the normal human body temperature, and the maximum value of 120°C in the interval is a designed upper limit temperature for the maximum reasonable diffusion rate of the repellent drug 2.

The present application utilizes the heating unit 11 to heat the repellent drug 2, thereby the repellent drug 2 is diffused into the air, as to achieve the mosquito prevention and control effect. In addition, the repellent drug used in the present application has the relatively low working temperature, so that the power consumption of this apparatus is relatively low, the endurance performance is better, the apparatus may be matched with the smaller power supply element, and the overall apparatus may be more lightweight.

### Embodiment 1:

A repellent drug 2 includes picaridin (also known as: icaridin), dimethyl phthalate, diethylmethylbenzamide, and methyl nonyl ketone. Matched with different carriers or auxiliary materials, the repellent drug 2 may be made into a plurality of forms. In this embodiment, the form of the repellent drug 2 is gel-like, the gel-like repellent drug 2 may be filled in a heat conduction container according to actual situations, the heat conduction container is in contact with a heating unit 11, and the gel-like repellent drug 2 is heated by the heating unit 11, so that it is volatilized to achieve the mosquito repelling effect.

A preparation method for the gel-like repellent drug includes the following preparation steps:
(1) 0.35wt% of carbopol, 4wt% of butanediol, and 59.66wt% of sterile water are mixed and stirred uniformly, then the temperature is raised to 85°C, and kept for 30 min, and it is homogenized for 5 min, to obtain initial solution;
(2) the initial solution is cooled to 50°C, 0.18wt% of aminomethyl propanol is added to the initial solution, and it is stirred uniformly, to obtain intermediate solution; and
(3) 15wt% of ethanol, 20wt% of the repellent drug 2, 0.3wt% of triethyl citrate, 0.05wt% of glycerol caprylate and 0.46wt% of a preservative are added to the intermediate solution, and it is stirred uniformly, to obtain the gel-like repellent drug 2.

### Embodiment 2:

In this embodiment, the form of the repellent drug 2 is a paste-like substance, the repellent drug 2 in this form may be filled in a heat conduction container, the heat conduction container is in contact with a heating unit 11, and the paste-like repellent drug 2 is heated by the heating unit 11, so that it is volatilized to achieve the mosquito repelling effect.

A preparation method for the paste-like repellent drug includes the following steps:
(1) 10~15 g of collagen powder is weighed and added to 200~300 g of deionized water, it is stirred and mixed uniformly, to obtain collagen solution;
(2) 6~8 g of cellulose, 3~5 g of glycerol, 1~2 g of stearic acid, and 1~2 g of sodium dodecyl sulfonate are sequentially added to the collagen solution, the pH value is adjusted to 10~11 by using 15wt% of sodium hydroxide solution, it is heated to 85~88°C after being adjusted, it is stirred and mixed for 50~60 min, and then cooled to a room temperature after being stirred, to obtain viscous solution;
(3) an organic curing agent (such as vaseline or peruvian balsam) is kept in a water bath at 70~80°C for 0.5 h, to obtain organic curing agent solution;
(4) the repellent drug 2 is added to the organic curing agent solution, it is stirred for 3~5 min, it is refrigerated and cured at 0~5°C for 3~5 h, and a solid paste-like substance is obtained after being cured; and
(5) the solid paste-like substance is added to the viscous solution in a mass ratio of 1:5, it is stirred for 3~5 min, and naturally dried for 6~8 h, to obtain the paste-like repellent drug.

### Embodiment 3:

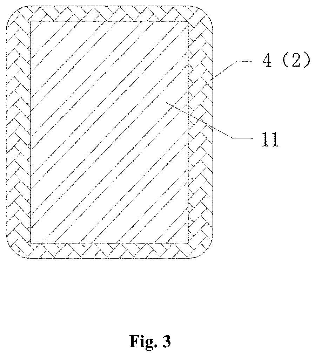

As shown in Fig. 3, in this embodiment, the repellent drug 2 is attached to a porous unit 4, the porous unit 4 is detachably arranged on a heating unit 11, the porous unit 4 is flexible non-woven fabric, and the repellent drug 2 is attached to gaps inside the non-woven fabric.

### Embodiment 4:

In this embodiment, the repellent drug 2 is tablet-like. In the preparation process, the repellent drug 2 is mixed with an inclusion agent (such as crown ether, cyclodextrin, calixarene, calixpyrrole, calixcarbazole, cucurbituril, and pillararene) and dried to form a solid, and then it is pressed into a tablet; and

a heating unit 11 is provided with an assembly structure matched with the tablet-like repellent drug 2. For example, the heating unit 11 is provided with an accommodating groove matched with the outline of the repellent drug 2, the tablet-like repellent drug 2 may be placed in the accommodating groove, and the tablet-like repellent drug 2 is fixed on the heating unit 11.

### Embodiment 5:

One of polyethylene (PE), and wood or cotton pulp is made into a tablet core; and after being made into the tablet core, it adsorbs repellent drug liquid, and is in contact with a heating unit.

The above are examples of the best implementation modes of the present application, herein parts that are not described in detail are common knowledge of those of ordinary skill in the art. The scope of protection of the present application is based on the content of the claims, and any equivalent transformations based on the technical inspiration of the present application are also within the scope of protection of the present application.

## Claims

1. A portable electric heating mosquito repelling apparatus, **characterized by** comprising an apparatus housing, a repellent drug, and a power supply element, the apparatus housing is provided with a heating unit, the repellent drug is detachably arranged on the heating unit, the heating unit is used to heat the repellent drug, the working temperature of the heating unit is greater than 40°C and less than 120°C, the power supply element is detachably arranged on the apparatus housing, and the power supply element is used to provide electric energy to the heating unit.

2. The portable electric heating mosquito repelling apparatus as claimed in claim 1, **characterized in that** the apparatus housing is provided with an information display unit, and the information display unit is used to display one or more of electric quantity of the power supply element, remaining usage time, and the working temperature of the heating unit.

3. The portable electric heating mosquito repelling apparatus as claimed in claim 1, **characterized in that** the apparatus housing is provided with a human-machine interaction unit, and the human-machine interaction unit is used to control on-off of the power supply element and is also used to adjust the working temperature of the heating unit.

4. The portable electric heating mosquito repelling apparatus as claimed in claim 1, **characterized in that** the repellent drug comprises one or more of picaridin, dimethyl phthalate, diethylmethylbenzamide, and methyl nonyl ketone.

5. The portable electric heating mosquito repelling apparatus as claimed in claim 4, **characterized in that** the repellent drug is gel-like.

6. The portable electric heating mosquito repelling apparatus as claimed in claim 4, **characterized in that** the repellent drug is a paste-like substance.

7. The portable electric heating mosquito repelling apparatus as claimed in claim 4, **characterized in that** the repellent drug is attached to a porous unit, and the porous unit is detachably arranged on the heating unit.

8. The portable electric heating mosquito repelling apparatus as claimed in claim 4, **characterized in that** the repellent drug is tablet-like, and the heating unit is provided with an assembly structure matched with the repellent drug.

9. The portable electric heating mosquito repelling apparatus as claimed in claim 4, **characterized in that** the repellent drug is liquid.
